# EUROPÄISCHE PATENTANMELDUNG

(11) **EP 0 774 847 A2**
(43) Veröffentlichungstag der Anmeldung: **21.05.1997**
(21) Anmeldenummer: 96100640.0
(22) Anmeldetag: 18.01.1996
(51) Int. Cl.: H04L 12/403, H04Q 11/04

(54) **Verfahren zur Erteilung von Sendeerlaubnissen**

(30) Priorität: 17.11.1995 DE 19542911
(71) Anmelder: Deutsche Telekom AG, 53113 Bonn (DE)
(72) Erfinder: Habermann, Reinhard, Dr.-Ing., 64331 Weiterstadt (DE)

(57) **Zusammenfassung**

Bei einem Verfahren zur Erteilung von Sendeerlaubnissen an mehrere an ein gemeinsames Übertragungsmedium angeschlossene Netzabschlußeinheiten, insbesondere für Netze mit asynchronem Übertragungsmodus (ATM), wobei die Netzabschlußeinheiten Nachrichten bis zum Erhalt einer Sendeerlaubnis zwischenspeichern, danach in das gemeinsame Übertragungsmedium senden und nach Aufforderung durch eine Steuereinrichtung Status-Meldungen über die in der jeweiligen Netzabschlußeinheit gespeicherten Nachrichten an die Steuereinrichtung senden, werden zur Erzielung einer gerechten Einteilung der Sendeerlaubnisse die Inhalte der Meldungen der Netzabschlußeinheiten gespeichert und abgefragt. Dabei wird an eine ausgewählte Netzabschlußeinheit eine Sendeerlaubnis erteilt und eine Aufforderung an die Netzabschlußeinheiten gesendet, weitere Meldungen zu senden, wenn für keine Netzabschlußeinheit ein Meldungsinhalt über zwischengespeicherte Nachrichten gespeichert ist.

## Beschreibung

Die Erfindung betrifft ein Verfahren zur Erteilung von Sendeerlaubnissen an mehrere an ein gemeinsames Übertragungsmedium angeschlossene Netzabschlußeinheiten, insbesondere für Netze mit aysnchronem Übertragungsmodus (ATM),
- wobei die Netzabschlußeinheiten von Nachrichtenquellen empfangene Nachrichten bis zum Erhalt einer Sendeerlaubnis zwischenspeichern und danach innerhalb von Zeitschlitzen in das gemeinsame Übertragungsmedium senden und
- wobei die Netzabschlußeinheiten nach Aufforderung durch eine Steuereinrichtung Meldungen an die Steuereinrichtung senden, welche den Status der in der jeweiligen Netzabschlußeinheit gespeicherten Nachrichten beinhalten.

Telekommunikationsnetze enthalten Komponenten (Übertragungsmedien, zentrale Einrichtungen), die gemeinsam und prinzipiell gleichzeitig von mehreren Teilnehmern in Anspruch genommen werden können. Dieses ist insbesondere bei Netzen der Fall, die keine feste Multiplex- bzw. Kanalstruktur - wie beispielsweise bei der Synchronous Time Division, STD - besitzen, sondern Nachrichten paketorientiert und teilweise auch verbindungslos transportieren. Der geregelte Zugriff auf die gemeinsam genutzten Medien und damit implizit auch die gerechte Aufteilung der Übertragungskapazität wird durch Verfahren zur Erteilung von Sendeerlaubnissen gesteuert, die im allgemeinen als MAC-Protokolle (Medium Access Control) bezeichnet werden.

Ein Beispiel für die Datenübertragung über ein gemeinsames Übertragungsmedium ist die zellbasierte Übertragung von Nachrichten in ATM-Netzen (ATM = Asynchronous Transfer Modus). Das dort verwendete ATD-Multiplex (ATD = Asynchronous Time Division) erfordert inhärent die Zwischenspeicherung von kollisionsgefährdeten Zellen.

Aufgabe der vorliegenden Erfindung ist es, ein Verfahren zur Erteilung von Sendeerlaubnissen an mehrere an ein gemeinsames Übertragungsmedium angeschlossene Netzabschlußeinheiten, insbesondere für Netze mit asynchronem Übertragungsmodus, anzugeben, bei welchem eine weitgehend gerechte (faire) Aufteilung der Übertragungskapazität an die einzelnen Nachrichtenquellen erzielt wird.

Diese Aufgabe wird erfindungsgemäß dadurch gelöst,
- daß die Inhalte der Meldungen der Netzabschlußeinheiten (Meldungsinhalte) gespeichert werden,
- daß anhand der gespeicherten Meldungsinhalte eine Netzabschlußeinheit ausgewählt wird, welche in dem folgenden Zeitschlitz sendet,
- daß eine Erteilung einer Sendeerlaubnis für die ausgewählte Netzabschlußeinheit erfolgt, und
- daß eine Aufforderung an die Netzabschlußeinheiten zum Senden von weiteren Meldungen gesendet wird, wenn für keine Netzabschlußeinheit ein Meldungsinhalt über zwischengespeicherte Nachrichten gespeichert ist.

Bei Anwendung des erfindungsgemäßen Verfahrens in zellbasierenden Netzen ist es zweckmäßig, die Menge der jeweils zwischengespeicherten Nachrichten in Anzahl von Zellen anzugeben. Zur Übertragung dieser Meldungen aller Netzabschlußeinheiten wird eine Zelle "Status Data" reserviert. Sollte eine Zelle nicht zur Übertragung aller Meldungen genügen, so kann die Meldung abschnittsweise in mehreren Zellen erfolgen. Das gleiche gilt für die von den Netzabschlußeinheiten bei Weiterbildungen des erfindungsgemäßen Verfahrens zu sendenden Zeitmarken. Die Sendeerlaubnisse und die Anforderungen zur Sendung der Meldungen werden von der Steuereinrichtung, die im Falle eines ATM-Netzes im Bereich der "Line Termination" angeordnet ist "down-stream" zu den Netzabschlußeinheiten übertragen. Die Einbindung dieser Nachrichten in die zur Endeinrichtung zu übertragenden Nachrichten bleibt dem Fachmann überlassen.

Das erfindungsgemäße Verfahren kann in ATM-Netzen an allen Übergängen zu gemeinsamen Übertragungsmedien angewendet werden. Auch im Anschlußbereich von ATM-Netzen ist die Anwendung des Verfahrens an verkehrskonzentrierenden Architekturen möglich. Auch außerhalb von ATM-Netzen kann das erfindungsgemäße Verfahren angewendet werden, um einen Zugang zu einem gemeinsamen Medium zu steuern.

Eine vorteilhafte Ausführungsform des erfindungsgemäßen Verfahrens besteht darin, daß die Meldungen die Menge der in der jeweiligen Netzabschlußeinheit gespeicherten Nachrichten beinhalten und daß die Auswahl nach dem Eintreffen von weiteren Meldungen bei demjenigen weiteren Meldungsinhalt begonnen wird, der in einer vorgegebenen Reihenfolge nach demjenigen Meldungsinhalt liegt, bei dem die vorangegangene Auswahl begonnen wurde.

Dabei ist vorzugsweise vorgesehen, daß die erste durch Abfrage der gespeicherten Meldungsinhalte nach einer vorgegebenen Reihenfolge gefundene Netzabschlußeinheit mit einem von null verschiedenen Meldungsinhalt ausgewählt wird. Eine Einsparung von Speicherplatz ist dabei dadurch möglich, daß nur die von null verschiedenen Meldungsinhalte gespeichert werden und daß die Netzabschlußeinheiten nach einer vorgegebenen Reihenfolge ausgewählt werden.

Mit dieser Ausführungsform kann für eine große Vielfalt von Verkehrssituationen eine gerechte Aufteilung der Übertragungskapazität durchgeführt werden.

Um Verkehrsquellen mit relativ großem oder mit relativ kleinem Verkehrsaufkommen in angemessener Weise zu berücksichtigen, kann gemäß anderen Ausführungsformen vorgesehen sein, daß eine Auswahl derjenigen Netzabschlußeinheit erfolgt, für die eine zyklische Abfrage die größte oder die kleinste Menge der zwischengespeicherten Nachrichten ergibt. Dabei kann je nach Voraussetzungen im einzelnen entschieden werden, ob der größten Menge der "wartenden" Nachrichten oder der kleinsten Menge Vorrang gegeben wird.

Um eine schnellere Aktualisierung der in der Steuereinrichtung gespeicherten Meldungen zu ermöglichen, kann bei diesen Ausführungsformen vorgesehen sein, daß ferner Meldungen über die Menge der zwischengespeicherten Nachrichten zwischen den von den Netzabschlußeinheiten in das gemeinsame Übertragungsmedium gesendeten Nachrichten gesendet werden, deren Inhalte die jeweils zuvor gespeicherten Meldungsinhalte ersetzen.

Mit der Benutzung eines gemeinsamen Übertragungsmediums sind - abgesehen von äußerst geringem Verkehrsaufkommen - Wartezeiten verbunden. Im allgemeinen werden Wartezeiten in einer von der jeweiligen Verkehrsquelle und Verkehrssenke abhängigen Größenordnung als unkritisch angesehen. Um Wartezeiten auf ein kritisches Maß zu begrenzen, ist bei einer Weiterbildung des erfindungsgemäßen Verfahrens vorgesehen, daß die Meldungen Zeitmarken beinhalten, welche die Zeit des Eintreffens der ältesten Nachricht in jeweils einer Netzabschlußeinheit wiedergeben, daß eine nach der Zeit sortierte Liste der Netzabschlußeinheiten, welche Zeitmarken gesendet haben, erstellt wird und daß die Auswahl nach der Reihenfolge der Liste der Netzabschlußeinheiten erfolgt.

Diese Weiterbildung kann derart ausgebildet sein, daß die Zeitmarken nur von denjenigen Netzabschlußeinheiten gesendet werden, in welchen Nachrichten zwischengespeichert sind. Damit wird Übertragungskapazität eingespart.

Um eine schnellere Aktualisierung der in der Steuereinrichtung gespeicherten Meldungen zu ermöglichen, sieht eine besondere Ausgestaltung dieser Weiterbildung vor, daß ferner Zeitmarken zwischen den von den Netzabschlußeinheiten in das gemeinsame Übertragungsmedium gesendeten Nachrichten gesendet werden und gegebenenfalls eine Aktualisierung der Liste bewirken.

Eine Berücksichtigung der Wartezeit und der Menge der jeweils wartenden Nachrichten erfolgt gemäß einer anderen Weiterbildung der Erfindung dadurch, daß die Meldungen ferner die Menge der in der jeweiligen Netzabschlußeinheit gespeicherten Nachrichten beinhalten, daß weitere Meldungen über die Menge der zwischengespeicherten Nachrichten zwischen den von den Netzabschlußeinheiten in das gemeinsame Übertragungsmedium gesendeten Nachrichten gesendet werden, daß die Mengen ebenfalls gespeichert werden, daß eine Auswahl nach den gespeicherten Mengen erfolgt, wenn die nach der Zeit sortierte Liste abgearbeitet ist, und daß die Auswahl nach dem Eintreffen von weiteren Meldungen mit Zeit- und Mengenangaben bei der nach der Zeit sortierten Liste forgesetzt wird.

Vorzugsweise ist dabei vorgesehen, daß die Auswahl nach der gespeicherten Menge jeweils bei derjenigen Menge begonnen wird, die in einer vorgegebenen Reihenfolge nach derjenigen Menge gespeichert ist, bei der die vorangegangene Auswahl nach der gespeicherten Menge begonnen wurde.

Auch bei dieser Weiterbildung kann die Auswahl nach der gespeicherten Menge nach einer vorgegebenen Reihenfolge durchgeführt werden, wobei die erste Netzabschlußeinheit ausgewählt wird, für welche die gespeicherte Menge von null verschieden ist. Es ist jedoch auch möglich, die Auswahl nach der gespeicherten Menge nach Größe der Menge durchzuführen, wobei diejenige Netzabschlußeinheit ausgewählt wird, für welche die gespeicherte Menge jeweils am größten oder am kleinsten ist.

Ausführungsbeispiele der Erfindung sind in der Zeichnung anhand mehrerer Figuren dargestellt und in der nachfolgenden Beschreibung näher erläutert. Es zeigt:
- Fig. 1: ein Blockschaltbild eines ATM-Anschlußnetzes soweit es zur Erläuterung der Erfindung erforderlich ist,
- Fig. 2: eine Tabelle zur Erläuterung eines ersten Ausführungsbeispiels und
- Fig. 3: eine Tabelle zur Erläuterung eines zweiten Ausführungsbeispiels.

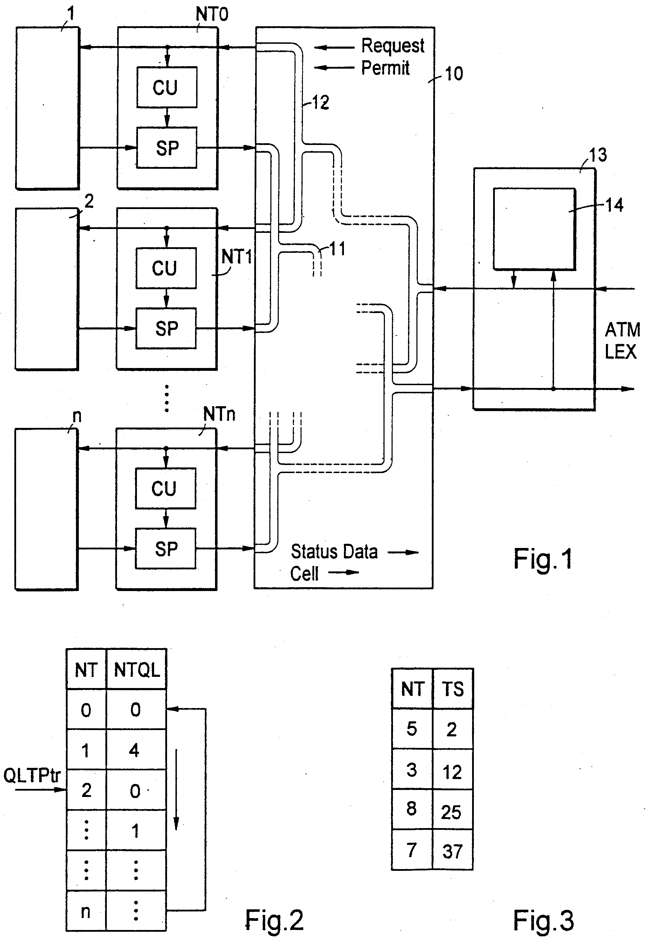

Bei dem Blockschaltbild nach Fig. 1 sind von einer Vielzahl von an ein ATM-Anschlußnetz angeschlossenen Verkehrsquellen lediglich drei Verkehrsquellen 1, 2, 3 dargestellt, die an sich auch Senken sind, was jedoch im Zusammenhang mit der vorliegenden Erfindung nicht von Bedeutung ist. Über Netzabschlußeinheiten NT0, NT1 bis NTn sind die Verkehrsquellen an ein gemeinsames Übertragungsmedium 10 angeschlossen. Dieses kann beispielsweise durch ein Baumnetz als passives optisches Netz realisiert sein. Die Übertragungsrichtungen "up-stream" und "down-stream" sind physikalisch getrennt. Im Anschlußnetz wird ein ATM-Übertragungsprotokoll gefahren, d. h., in den Zeitschlitzen des Mediums mit konstanter Länge werden ATM-Zellen übertragen. In den Zellen ist jeweils ein bestimmter Overhead für die Verwaltung des Netzes vorgesehen.

Während sich die Nachrichten in Down-stream-Richtung 12 gleichmäßig über den Baum zu allen Netzabschlußeinheiten ausbreiten können, ist in Up-stream-Richtung 11 sicherzustellen, daß immer nur eine Netzabschlußeinheit gleichzeitig Zugriff auf das Baumnetz erhält. Das ATM-Anschlußnetz arbeitet in der Regel als Up-stream-Verkehrskonzentrator, d. h., die Übermittlungskapazität bzw. die Übertragungskapazität der anschließenden LT-Schnittstelle (LT = Line Termination) ist kleiner als die Summe der durch die Netzabschlußeinheiten NT0 bis NTn maximal angebotenen Bitraten.

In dem dargestellten ATM-Anschlußnetz haben die Netzabschlußeinheiten keine Kenntnis von dem Zustand der anderen Netzabschlußeinheiten, so daß jeweils eine Sendeerlaubnis von einer zentralen Stelle zugeteilt werden muß, um Kollisionen zu vermeiden. Diese Aufgabe wird bei dem Ausführungsbeispiel nach Fig. 1 durch eine Steuereinrichtung 14 innerhalb der Line Termination 13 nach sogenannten Permit Distribution Algorithm (PDA) vorgenommen.

In den Netzabschlußeinheiten NT0 bis NTn befindet sich jeweils ein Speicher SP für mehrere Zellen der zu übertragenden Nachrichten. Ferner ist in den Netzabschlußeinheiten NT0 bis NTn jeweils eine Steuereinrichtung CU vorgesehen, welche aus den in Down-stream-Richtung übertragenen Nachrichten Kommandos für den Speicher SP erhält. Diese Kommandos sind eine Sendeerlaubnis - im folgenden auch Permit genannt - und eine Anforderung - im folgenden auch Request genannt -. In Up-stream-Richtung werden von dem gemeinsamen Übertragungsmedium 10 neben Zellen mit den zu übertragenden Nachrichten auf Anforderung durch "Request" jeweils ein Zeitschlitz mit Statusdaten (Status Data) übertragen. Die Line Termination 13 verfügt ferner über eine Schnittstelle zu einer nicht dargestellten Teilnehmervermittlungsstelle (ATM LEX).

Die Zahlen der wartenden Zellen, welche von den Netzabschlußeinheiten nach einer Anforderung gemeldet werden, werden in der Steuereinrichtung 14 in Tabellenform abgelegt. Ein Beispiel für eine solche Tabelle ist in Fig. 2 dargestellt. So hat beispielsweise die Netzabschlußeinheit NT0 keine wartende Zelle, die Netzabschlußeinheit NT1 vier wartende Zellen, die Netzabschlußeinheit NT2 keine und die Netzabschlußeinheit NT3 eine wartende Zelle gemeldet.

Ein Zeiger QLTPtr wird beim Start auf eine beliebige Zeile der Tabelle gesetzt. Mit Hilfe des im folgenden dargestellten Programms folgt eine zyklische Abfrage der Tabellenzeilen - im folgenden auch als CS = Cyclic Search abgekürzt -, bis entweder eine Netzabschlußeinheit gefunden ist, bei welcher die Zahl der wartenden Zellen NTQL größer als 0 ist, oder alle Netzabschlußeinheiten einmal abgefragt wurden. Für die gefundene Zelle wird ein Permit gesendet, was mit einer entsprechenden Adresse versehen von der jeweiligen Steuereinrichtung CU dem Speicher SP zur Ausgabe einer Zelle von Nachrichten zugeleitet wird. Außerdem wird ein Request an die Netzabschlußeinheiten gesendet, um eine neue Status-Meldung zu erhalten, welche die in Fig. 2 dargestellte Tabelle aktualisiert. Die folgende zyklische Abfrage wird dann in der Tabelle eine Zeile nach derjenigen Zeile fortgesetzt, in welcher das Vorhandensein von wartenden Nachrichten gefunden wurde.

Für das anhand von Fig. 2 erläuterte Verfahren eignet sich insbesondere folgendes Programm:

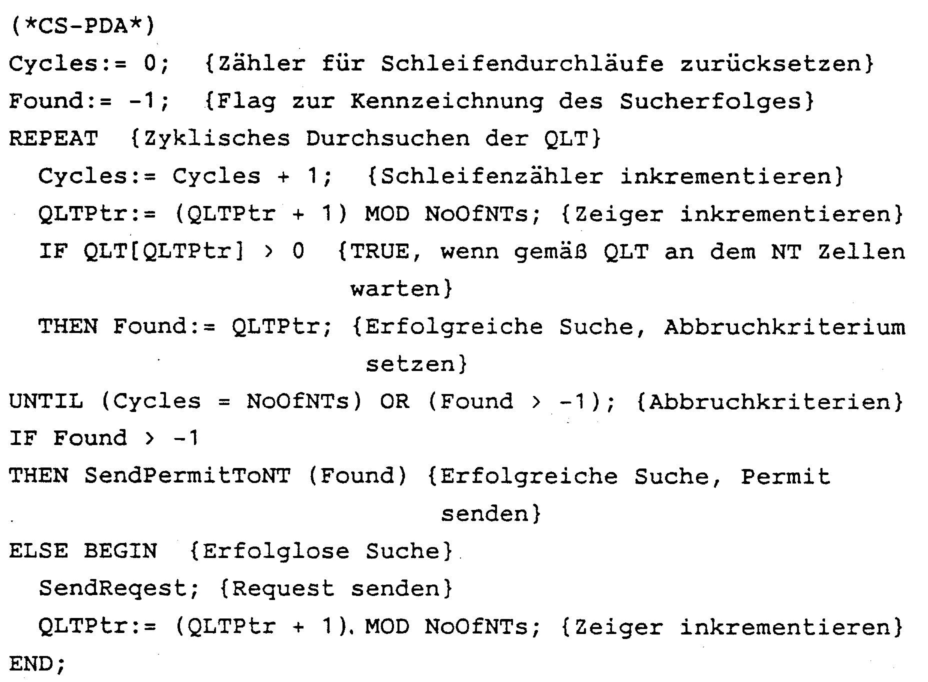

Um eine schnellere Aktualisierung der Liste gemäß Fig. 2 zu erreichen, kann bei dem erfindungsgemäßen Verfahren vorgesehen sein, daß auch während des Sendens der Zellen Meldungen über die Anzahl der jeweils wartenden Zellen zur Steuereinrichtung 14 (Fig. 1) übertragen werden. Dazu sind bei den meisten zellorientierten Übertragungssystemen Reservekapazitäten im sogenannten Overhead vorhanden.

Mit dem im folgenden dargestellten Programm ist eine bevorzugte Erteilung von Sendeerlaubnissen für Verkehrsquellen mit kurzen Nachrichten möglich. Dieses kann im Einzelfall zweckmäßig sein, wenn Verkehrsquellen mit hohem Verkehrsaufkommen durch die bevorzugte Behandlung der Verkehrsquellen mit wenig bzw. kurzen Nachrichten kaum behindert werden.

Das dargestellte Programm sucht aus den Einträgen in der Liste denjenigen mit der kleinsten Anzahl von wartenden Zellen (NTQL) heraus und erteilt der zugehörigen Netzabschlußeinheit das Permit.

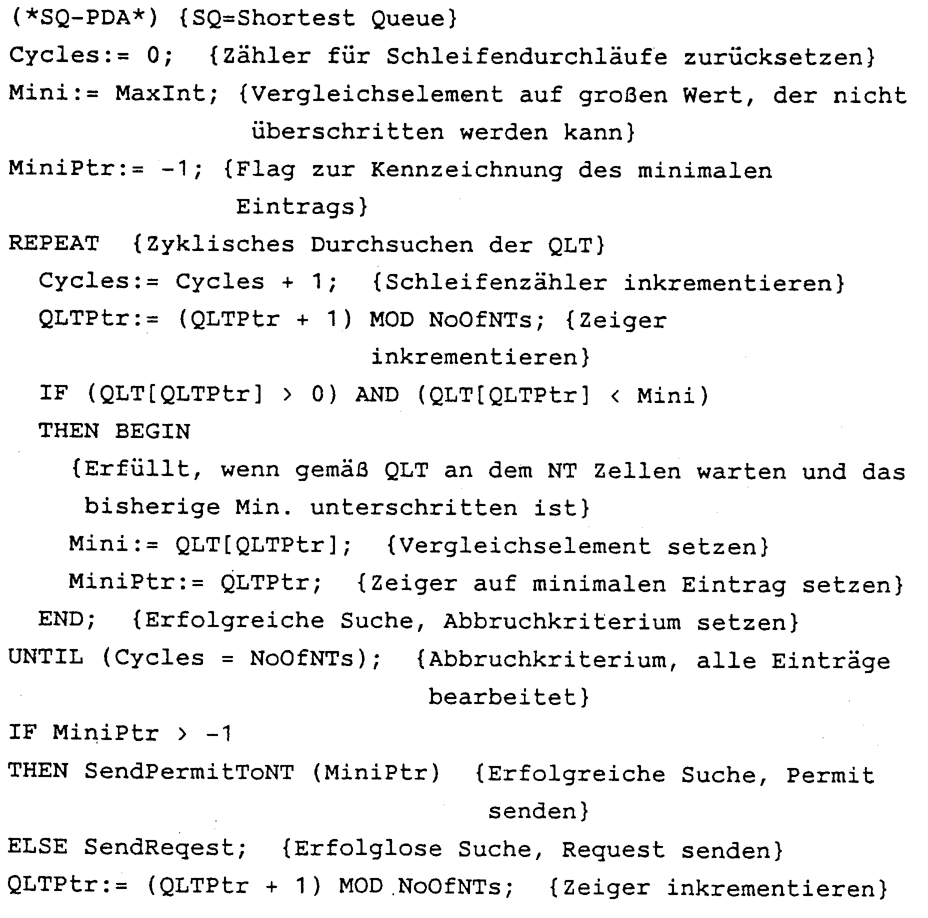

Das im folgenden dargestellte Programm sorgt dadurch für eine möglichst schnelle Übertragung von größeren Nachrichtenmengen jeweils einer Verkehrsquelle, daß aus der Liste die jeweils größte Anzahl NTQL zur Erteilung des Permits ausgewählt wird.

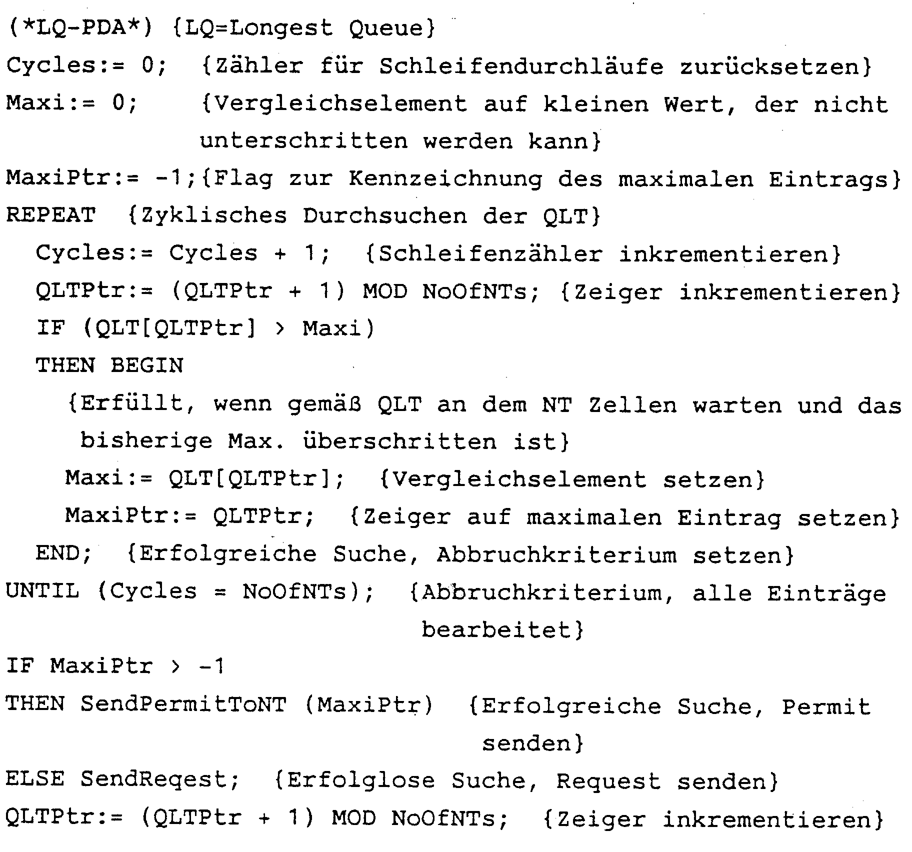

In Verbindung mit Fig. 3 wird ein Programm beschrieben, das die Ankunftszeit der jeweils ältesten in einer Netzabschlußeinheit gespeicherten Zelle berücksichtigt. Dazu werden diese Zeiten als Zeitmarken TS (=Time Stamp) innerhalb der Statusdaten zur Steuereinrichtung 14 übertragen. Die Zeitmarken werden von einem Zähler erzeugt, dessen Maximalwert mindestens der größten zu berücksichtigenden Wartezeit entspricht. Ein Durchgang durch Null führt dann zu einer negativen Zeitangabe, was durch Addition des Maximalwertes korrigiert wird. In der Steuereinrichtung werden die Zeitmarken der Größe nach sortiert. Die Abfrage beginnt bei der Eintragung mit der kleinsten Zeitmarke - im in Fig. 3 gezeigten Zustand mit der Netzabschlußeinheit NT5. Darauf folgt dann die Eintragung für die Netzabschlußeinheit NT3 usw..

Ein zugehöriges Programm ist im folgenden in zwei Varianten wiedergegeben:

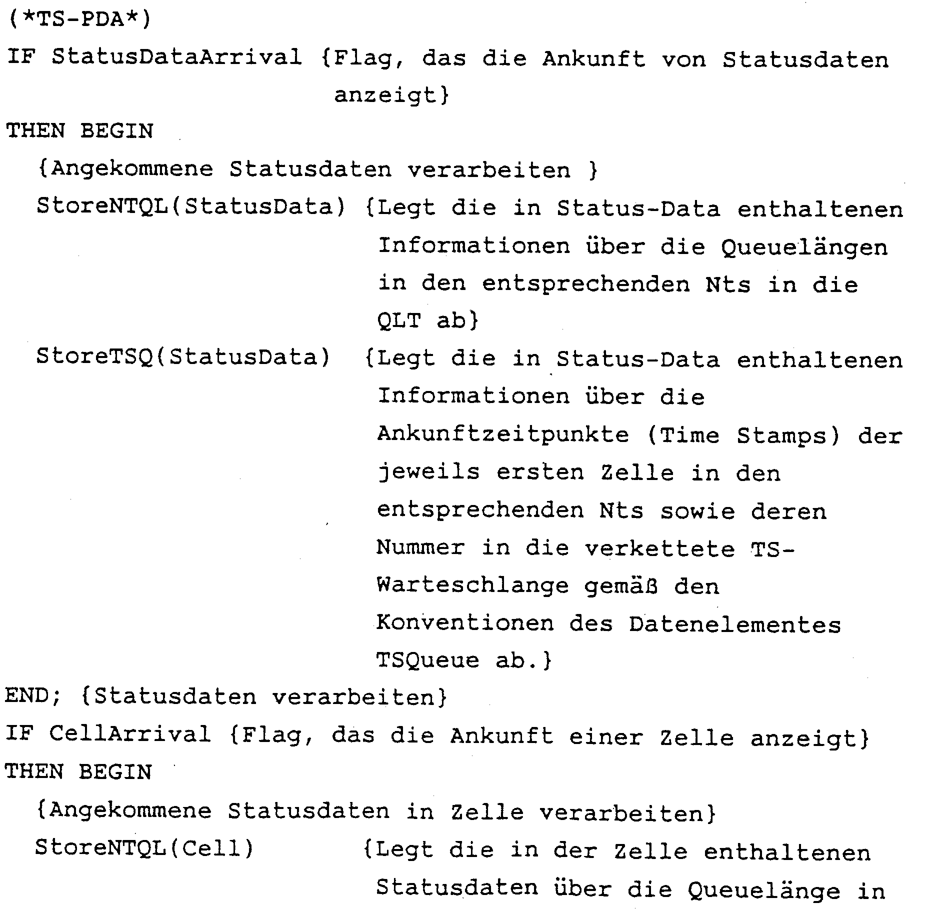

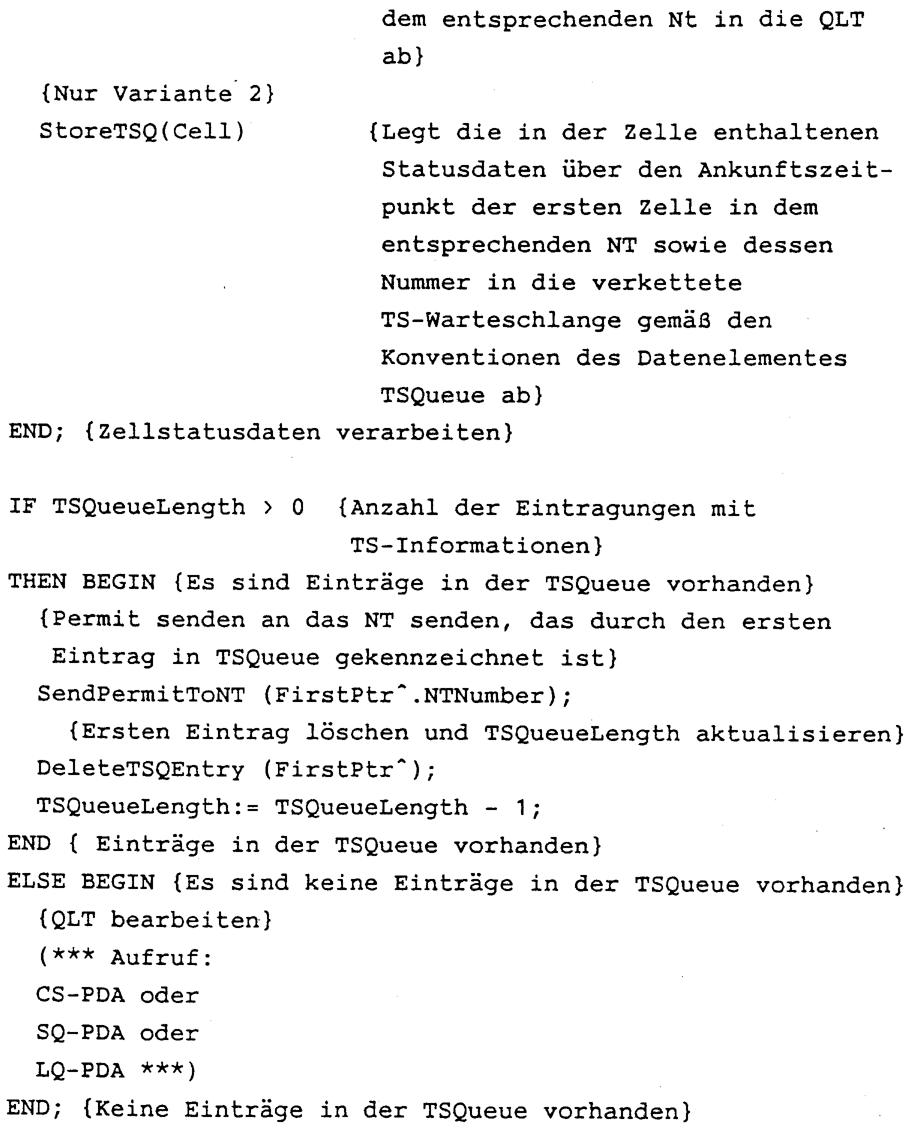

Der Aufruf eines der Programme CS-PDA, SQ-PDA oder LQ-PDA bedeutet, daß nach dem Abarbeiten der nach Zeitmarken sortierten Liste eine Liste durchgearbeitet wird, welche die Anzahl von wartenden Zellen (NTQL) enthält - und zwar nach einer der zuvor beschriebenen Methoden.

## Patentansprüche

**1.** Verfahren zur Erteilung von Sendeerlaubnissen an mehrere an ein gemeinsames Übertragungsmedium angeschlossene Netzabschlußeinheiten, insbesondere für Netze mit aysnchronem Übertragungsmodus (ATM),
- wobei die Netzabschlußeinheiten von Nachrichtenquellen empfangene Nachrichten bis zum Erhalt einer Sendeerlaubnis zwischenspeichern und danach innerhalb von Zeitschlitzen in das gemeinsame Übertragungsmedium senden und
- wobei die Netzabschlußeinheiten nach Aufforderung durch eine Steuereinrichtung Meldungen an die Steuereinrichtung senden, welche den Status der in der jeweiligen Netzabschlußeinheit gespeicherten Nachrichten beinhalten, dadurch gekennzeichnet,
- daß die Inhalte der Meldungen der Netzabschlußeinheiten (Meldungsinhalte) gespeichert werden,
- daß anhand der gespeicherten Meldungsinhalte eine Netzabschlußeinheit ausgewählt wird, welche in dem folgenden Zeitschlitz sendet,
- daß eine Erteilung einer Sendeerlaubnis für die ausgewählte Netzabschlußeinheit erfolgt, und
- daß eine Aufforderung an die Netzabschlußeinheiten zum Senden von weiteren Meldungen gesendet wird, wenn für keine Netzabschlußeinheit ein Meldungsinhalt über zwischengespeicherte Nachrichten gespeichert ist.

**2.** Verfahren nach Anspruch 1, dadurch gekennzeichnet, daß die Meldungen die Menge der in der jeweiligen Netzabschlußeinheit gespeicherten Nachrichten beinhalten und daß die Auswahl nach dem Eintreffen von weiteren Meldungen bei demjenigen weiteren Meldungsinhalt begonnen wird, der in einer vorgegebenen Reihenfolge nach demjenigen Meldungsinhalt liegt, bei dem die vorangegangene Auswahl begonnen wurde.

**3.** Verfahren nach Anspruch 2, dadurch gekennzeichnet, daß die erste durch Abfrage der gespeicherten Meldungsinhalte nach einer vorgegebenen Reihenfolge gefundene Netzabschlußeinheit mit einem von null verschiedenen Meldungsinhalt ausgewählt wird.

**4.** Verfahren nach Anspruch 2, dadurch gekennzeichnet, daß nur die von null verschiedenen Meldungsinhalte gespeichert werden und daß die Netzabschlußeinheiten nach einer vorgegebenen Reihenfolge ausgewählt werden.

**5.** Verfahren nach Anspruch 2, dadurch gekennzeichnet, daß eine Auswahl derjenigen Netzabschlußeinheit erfolgt, für die eine zyklische Abfrage die größte Menge der zwischengespeicherten Nachrichten ergibt.

**6.** Verfahren nach Anspruch 2, dadurch gekennzeichnet, daß eine Auswahl derjenigen Netzabschlußeinheit erfolgt, für die eine zyklische Abfrage die kleinste Menge der zwischengespeicherten Nachrichten ergibt.

**7.** Verfahren nach einem der Ansprüche 2 bis 6, dadurch gekennzeichnet, daß ferner Meldungen über die Menge der zwischengespeicherten Nachrichten zwischen den von den Netzabschlußeinheiten in das gemeinsame Übertragungsmedium gesendeten Nachrichten gesendet werden, deren Inhalte die jeweils zuvor gespeicherten Meldungsinhalte ersetzen.

**8.** Verfahren nach Anspruch 1, dadurch gekennzeichnet, daß die Meldungen Zeitmarken beinhalten, welche die Zeit des Eintreffens der ältesten Nachricht in jeweils einer Netzabschlußeinheit wiedergeben, daß eine nach der Zeit sortierte Liste der Netzabschlußeinheiten, welche Zeitmarken gesendet haben, erstellt wird und daß die Auswahl nach der Reihenfolge der Liste der Netzabschlußeinheiten erfolgt.

**9.** Verfahren nach Anspruch 8, dadurch gekennzeichnet, daß die Zeitmarken nur von denjenigen Netzabschlußeinheiten gesendet werden, in welchen Nachrichten zwischengespeichert sind.

**10.** Verfahren nach einem der Ansprüche 8 oder 9, dadurch gekennzeichnet, daß ferner Zeitmarken zwischen den von den Netzabschlußeinheiten in das gemeinsame Übertragungsmedium gesendeten Nachrichten gesendet werden und gegebenenfalls eine Aktualisierung der Liste bewirken.

**11.** Verfahren nach Anspruch 10, dadurch gekennzeichnet, daß die Meldungen ferner die Menge der in der jeweiligen Netzabschlußeinheit gespeicherten Nachrichten beinhalten, daß weitere Meldungen über die Menge der zwischengespeicherten Nachrichten zwischen den von den Netzabschlußeinheiten in das gemeinsame Übertragungsmedium gesendeten Nachrichten gesendet werden, daß die Mengen ebenfalls gespeichert werden, daß eine Auswahl nach den gespeicherten Mengen erfolgt, wenn die nach der Zeit sortierte Liste abgearbeitet ist, und daß die Auswahl nach dem Eintreffen von weiteren Meldungen mit Zeit- und Mengenangaben bei der nach der Zeit sortierten Liste forgesetzt wird.

**12.** Verfahren nach Anspruch 11, dadurch gekennzeichnet, daß die Auswahl nach der gespeicherten Menge jeweils bei derjenigen Menge begonnen wird, die in einer vorgegebenen Reihenfolge nach derjenigen Menge gespeichert ist, bei der die vorangegangene Auswahl nach der gespeicherten Menge begonnen wurde.

**13.** Verfahren nach einem der Ansprüche 11 oder 12, dadurch gekennzeichnet, daß die Auswahl nach der gespeicherten Menge nach einer vorgegebenen Reihenfolge durchgeführt wird, wobei die erste Netzabschlußeinheit ausgewählt wird, für welche die gespeicherte Menge von null verschieden ist.

**13.** Verfahren nach einem der Ansprüche 11 oder 12, dadurch gekennzeichnet, daß die Auswahl nach der gespeicherten Menge nach Größe der Menge durchgeführt wird, wobei diejenige Netzabschlußeinheit ausgewählt wird, für welche die gespeicherte Menge jeweils am größten ist.

**14.** Verfahren nach einem der Ansprüche 11 oder 12, dadurch gekennzeichnet, daß die Auswahl nach der gespeicherten Menge nach Größe der Menge durchgeführt wird, wobei diejenige Netzabschlußeinheit ausgewählt wird, für welche die gespeicherte Menge jeweils am kleinsten ist.
